# EUROPEAN PATENT APPLICATION

(11) **EP 0 691 242 A1**
(43) Date of publication of application: **10.01.1996**
(21) Application number: 95110431.4
(22) Date of filing: 04.07.1995
(51) Int. Cl.: B60Q 3/04

(54) **Virtual image display for signalling instruments, for an instrument panel of a motor vehicle for example**

(30) Priority: 08.07.1994 IT TO940151 U
(71) Applicant: MAGNETI MARELLI S.p.A., I-20145 Milano (IT)
(72) Inventor: Caruso, Pietro, I-20012 Cuggiono (IT)
(74) Representative: Jorio, Paolo

(57) **Abstract**

The display comprises at least one instrument having a warning light (11) capable of emitting a signalling image, a transparent read-out screen (7) and a reflecting surface (16) capable of reflecting the image onto the screen (7). For this purpose the warning light (11) is integrated in the panel (5) of the instruments and is arranged behind the screen (7), in a position which is offset with respect to the eye (8) of the driver. The warning light (11) and the reflecting surface (16) are arranged in a reciprocal position so as to generate a virtual image on the screen (7). The reflecting surface (16) may be represented by an inclined surface of a semi-reflecting prism (20) which has another surface (21) via which a direct image of a second warning light (22) is projected onto the screen (7). This may be arranged in such a way that the second image is arranged on a plane different from the plane (17) of the virtual image.

## Description

The invention relates to a virtual image display for signalling instruments, for an instrument panel of a motor vehicle for example.

As is known, in modern instrument panels some information is supplied to the driver from warning lights located on the surface of the panel, immediately behind a transparent screen, for example. Albeit economical, this solution has the disadvantage that the visibility of the lights often becomes inadequate if there is strong external light.

To obviate this disadvantage it has been proposed to arrange the warning light on a structure separate from the screen, commonly called the "cowl" of the instrument . This is arranged higher up, at an angle with respect to the screen, so as to reduce the effect of the external light on it. In its turn the screen is reflecting and creates a virtual image of the warning light.

This solution does, however, have the disadvantage that a troublesome split image of the information is caused because of the not insignificant thickness of the screen. Furthermore, this solution proves to be relatively expensive because the cowl is separate from the panel.

The object of the invention is to produce a virtual image display which is of the utmost simplicity and structural economy and which eliminates the disadvantages listed above in respect of known displays.

This object is achieved with the display according to the invention which comprises at least one instrument comprising a warning light capable of emitting a signalling image, and a transparent read-out screen, said light being arranged in an offset position behind said screen, an optical system being provided in order to create a virtual signalling image on said screen, and is characterized in that said optical system comprises a reflecting surface associated with said light and arranged behind said screen, said light and said surface being arranged in a reciprocal position so as to generate said virtual image.

A number of preferred embodiments of the model will now be described in order to provide a better understanding of the invention, by way of examples and with the aid of the accompanying drawings, in which :
Fig. 1 is a diagram of a virtual image display according to a first embodiment of the invention;
Fig. 2 is a diagram of a variant of the display of Fig. 1;
Fig. 3 is a diagram of a virtual image display according to another embodiment of the invention.

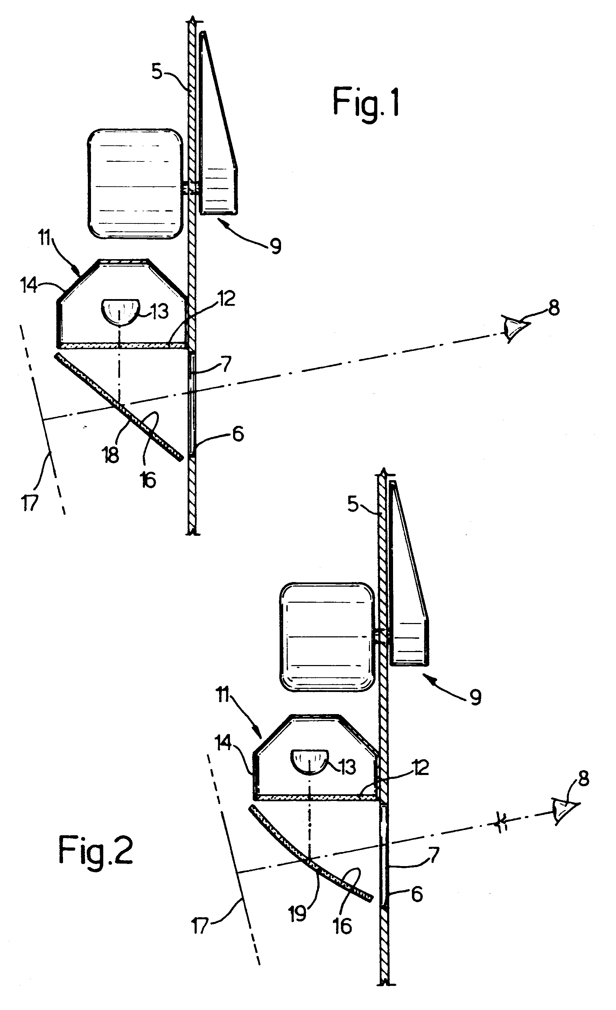

With reference to Fig. 1, 5 denotes an instrument panel, in vertical section, which carries the usual instruments of a motor vehicle instrument panel. A speedometer 9 is shown in Fig. 1 by way of example. The panel 5 is also equipped with a window 6 in which a transparent read-out screen 7 is arranged. This screen 7 is usually arranged at a distance of 40-60 cm from the view point, in other words from the eye 8 of the driver.

The panel 5 also carries at least one other information signalling instrument having a warning light represented by a light assembly, generically denoted by 11. This is fitted with a polycarbonate support 12 on which the mirror image of the information to be displayed, such as a symbol, a number or a word, is silk-screen-printed. The assembly 11 is also fitted with a warning lamp 13 arranged between the support 12 and a reflector 14. The warning lamp 13 is capable of lighting up to display the image silk-screen-printed on the support 12.

According to the invention the assembly 11 is integrated on the panel 5 and is arranged behind the screen 7 in an offset position with respect to the eye 8 of the driver. Furthermore, the assembly 11 is associated with a corresponding optical system comprising a reflecting surface 16. Advantageously, the surface 16 is arranged substantially at 45° with respect to the plane of the screen 7 whereas the assembly 11 is fixed to the panel 5 in a position such as to project the mirror image of the signalling along a direction substantially parallel to the plane of the screen 7.

The assembly 11 and the surface 16 are arranged in a reciprocal position so as to permit the surface 16 to reflect the mirror image projected by the assembly 11 towards the eye 8 of the driver. The driver thus perceives the reflected image as a virtual image lying in a plane 17. This plane is arranged at a distance from the surface 16 corresponding to that between the support 12 and the surface 16. The distance between the virtual image and the eye 8 is therefore much greater than the distance of the screen 7 so that the eye 8 is required to make less effort in re-focussing, when changing from focussing on the road to focussing on the information on the instrument panel.

In Fig. 1 the surface 16 is arranged on a plane mirror 18 so that the image of the support is reflected with no changes of dimensions. In the variant of Fig. 2 the surface 16 advantageously comprises a mirror 19 which is slightly curved, convex for example, so that it assumes a certain power of magnification. The mirror 19 has a focal plane passing substantially in correspondence with the position of the eye 8 of the driver. The driver thus perceives the virtual image conveniently magnified.

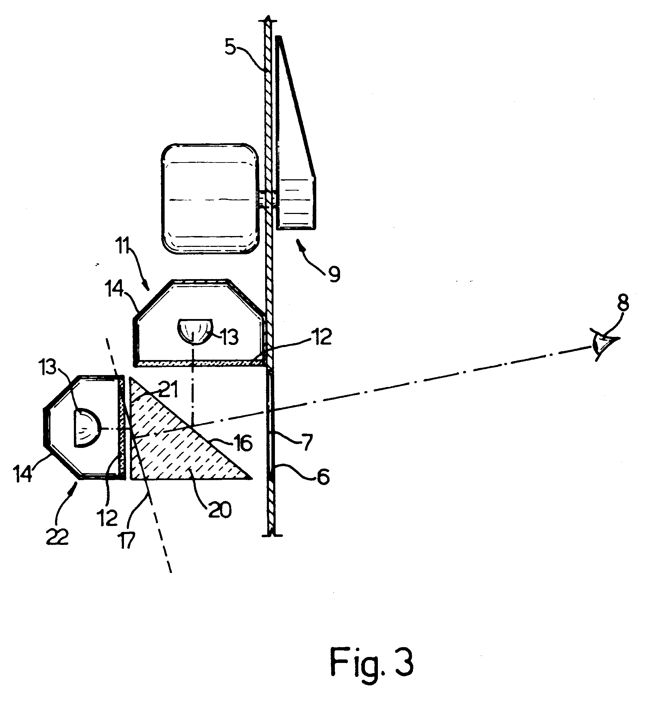

According to the embodiment of Fig. 3, the surface 16 is represented by the inclined surface of a semi-reflecting prism 20. This has another surface 21 which is substantially vertical, behind which a second light assembly 22 is arranged. This is similar to the assembly 11 so that the respective components are denoted by the same reference numerals as those of the assembly 11.

The silk-screen-printed support 12 of the assembly 22 carries other information, the image of which is direct and which is projected onto the screen 7 via the prism 20 when the respective lamp 13 lights up. By way of example the two assemblies 11 and 22 may be provided for alternative information, such as the left-hand and right-hand indicator symbols, or the control information "OK" and "FAULT".

According to a variant of the embodiment of Fig. 3, which is not shown, the assembly 11, and/or the assembly 22, may be arranged in such a way that the support 12 of the assembly 22 is on a different plane from the plane 17 of the virtual image of the assembly 11. In this way the two images will appear to the eye 8 on two different planes and will be more readily distinguishable by the eye 8.

The advantages of the display according to the invention compared with the known displays will be evident from the above. Above all, the effect of the external light is eliminated without requiring the usual instrument "cowl", so that the information displayed always appears very vivid. Furthermore the fatigue on the eye due to the re-focussing that is required for reading out is greatly reduced. Finally, because of the simplicity of its structure and design the display can be intended for large-scale production at modest cost.

It is intended that various modifications and improvements can be made to the displays described without departing from the scope of the claims. For example, the screen 7 may also be provided for two or more signalling instruments. Furthermore, whenever in the embodiment of Fig. 3 it is desired to enlarge the virtual image with respect to the image of the support 12, the assembly 11 can be associated with a lens.

## Claims

1. Virtual image display for signalling instruments, for an instrument panel of a motor vehicle for example, comprising an instrument having at least one warning light (11) capable of emitting a signalling image, and a transparent read-out screen (7), said light (11) being arranged in an offset position behind said screen (7), an optical system being provided in order to create a virtual signalling image on said screen (7), characterized in that said optical system comprises a reflecting surface (16) associated with said light (11) and arranged behind said screen (7), said light (11) and said surface (16) being arranged in a reciprocal position so as to generate said virtual image.

2. Display according to Claim 1, characterized in that said warning light comprises an assembly (11) comprising a polycarbonate support (12) silk-screen-printed with the image of said signalling, a reflector (14) and a lamp (13) arranged between said support (12) and said reflector (14).

3. Display according to Claim 1 or 2, characterized in that said surface (16) is arranged substantially at 45° with respect to the plane of said screen (7), said warning light (11) being capable of causing the projection of a mirror image in a direction substantially parallel to the plane of said screen (7).

4. Display according to Claim 3, characterized in that said surface (16) is included in a curved mirror (19) having the focal plane in a position such as to project a magnified reflected image onto the eye (8) of the driver.

5. Display according to Claim 3, characterized in that said surface (16) is arranged on a semi-reflecting prism (20), a second warning light (22) being provided behind said screen (7) to project onto said screen (7) a second image via another surface (21) of said prism (20), said second warning light (22) being arranged at a distance from said screen (7) which is different from the apparent distance of said virtual image.
